# EUROPÄISCHE PATENTSCHRIFT

(11) **EP 0 626 244 B1**
(45) Veröffentlichungstag und Bekanntmachung des Hinweises auf die Patenterteilung: **14.11.2001**
(21) Anmeldenummer: 94107908.9
(22) Anmeldetag: 21.05.1994
(51) Int. Cl.: B29B 13/06, F26B 21/08, B01D 53/26, B01J 20/34

(54) **Verfahren zum Betreiben eines Trockenluft-Trockners**
Method of operating a drying-air drier
Procédé pour l'exploitation d'un sécheur à air sec

(30) Priorität: 28.05.1993 DE 4317768
(43) Veröffentlichungstag der Anmeldung: 30.11.1994
(73) Patentinhaber: SOMOS GmbH, D-64331 Weiterstadt (DE)
(72) Erfinder: Gräff, Roderich W., Dr.-Ing., D-64291 Darmstadt (DE)
(74) Vertreter: Voth, Gerhard, Dipl.-Ing.

(56) Entgegenhaltungen:
- EP-A- 0 162 537
- EP-A- 0 266 684
- WO-A-80/01315
- DE-A- 3 412 173
- DE-A- 3 625 013
- FR-A- 2 307 567
- PATENT ABSTRACTS OF JAPAN vol. 8, no. 3 (C-203) 7. Januar 1984 & JP-A-58 170 518 (NIHON SANSO K.K.) 7. Oktober 1983
- PLASTVERARBEITER, Bd.38, Nr.8, August 1987, SPEYER/RHEIN DE Seiten 60 - 62 DIPL.-ING. GÜNTER OWERFELDT UND DR. MANFRED KURZ 'KONTINUIERLICH ARBEITENDER ADSORPTIONSTROCKNER'
- KUNSTSTOFFE, Bd.78, Nr.4, April 1988, MUNCHEN DE Seiten 318 - 322 DIPL.-ING. GÜNTER OWERFELDT UND DR. PHIL. MANFRED KURZ 'TROCKNEN VON KUNSTSTOFFGRANULATEN MIT ENTFEUCHTETER LUFT'

## Beschreibung

Die Erfindung betrifft ein Verfahren nach dem Oberbegriff des Anspruchs 1.

Ein strömendes, mit Feuchte beladenes Gas entsteht beispielsweise als Abgas aus einem Trichter, in welchem mittels Trockenluft Kunststoffgranulat getrocknet wird. Hierbei wird etwa gemäß deutscher Offenlegungsschrift DE-A-36 25 013 das Abgas durch einen oder mehrere mit Adsorptionsmittel gefüllte Trockentöpfe geleitet, wobei das Adsorptionsmittel dem Gas die Feuchte entzieht, so daß das dann trockene Gas als Trockengas erneut zum Trocknen des Kunststoffgranulats verwendet werden kann.

Wenn das Adsorptionsmittel in einem Trockentopf mit Feuchte gesättigt ist, wird der Trockentopf in ein Regenerationsphase überführt, bei welcher aufgeheizte Außenluft durch das Adsorptionsmittel geleitet wird und dabei die in diesem adsorbierte Feuchte mitnimmt. Die Temperatur der zur Regeneration dienenden Heißluft liegt mit etwa 250°C wesentlich höher als die Temperatur der zu trocknenden Abluft, die üblicherweise 60°C beträgt.

Wird ein Trockentopf nach Abschluß der Regeneration wieder zur Adsorption der Feuchte aus der Abluft verwendet, wird aufgrund der hohen Temperatur des Adsorptionsmittels anfangs das Abgas nicht getrocknet; außerdem wird das durch das heiße Adsorptionsmittel strömende Abgas auf eine Temperatur aufgeheizt, die oberhalb der für die Trockenluft erwünschten Temperatur liegt.

Daher sind bereits Maßnahmen vorgeschlagen worden, das am Ende einer Regenerationsphase noch sehr heiße Adsorptionsmittel zu kühlen und erst dann für die Adsorption der Feuchte au der Abluft bereit zu stellen. Aus der offengelegten europäischen Patentanmeldung mit der Veröffentlichungsnummer EP-A-0.162.537 sind zwei parallelgeschaltete Trockentöpfe bekannt, von denen jeweils einer sich in der Regenerationsphase und der andere in der Adsorptionsphase befindet. Zum Kühlen des heißen Adsorptionsmittels wird am Ende der Regenerationsphase ein Teilstrom des Abgases durch das heiße Adsorptionsmittel geleitet und danach dem aus dem anderen Trockentopf kommenden Trockengas beigemischt. Dies hat den Nachteil, daß der zum Kühlen verwendetet Teilstrom des Abgases nicht getrocknet und daher der Feuchtegehalt der Trockenluft verschlechtert wird. Außerdem wird die Trockenluft durch den zum Kühlen benutzten Abgas-Teilstrom erheblich aufgeheizt, was in vielen Anwendungsfällen unerwünscht ist.

Bei der aus der deutschen Offenlegungsschrift DE-A-34 12 173 bekannten Einrichtung wird zur Kühlung des heißen Adsorptionsmittels ein Trockenluft-Teilstrom benutzt, der nach Durchströmen des heißen Adsorptionsmittels in den Strom der zugeführten Abluft zurückgeleitet wird. Nachteilig ist hierbei, daß während der Kühlphase nur eine geringere Menge an Trockenluft für den Verbraucher zur Verfügung steht und daß die Temperatur der aufzubereitenden Abluft auf einen Wert erhöht wird, der den Wirkungsgrad der Adsorption erniedrigt.

Aus der EP-A-0.266.684 ist ein Verfahren zum Regenerieren einer mit Feuchtigkeit beladenen Trocknungspatrone bekannt. Dort wird die mit Feuchte beladene Luft durch eine Trocknungspatrone geführt, welche die Feuchtigkeit aus der Trocknungsluft aufnimmt. Die Trocknungsluft gelangt dann wieder zum zu trocknenden Gut zurück. Bei der Regeneration wird Luft von außen aufgenommen, erhitzt und nach dem Durchtritt durch die Patrone ausgeblasen die anschließend gekühlt werden muß.

Ein Nachteil dieses Verfahrens liegt darin, daß ein hoher Energieaufwand für das Kühlen bzw. das Erhitzen erforderlich ist.

Es sind ferner aus der WO 80/01315 sowie aus weiteren Veröffentlichungen wie beispielsweise FR-A-2307567 oder JP-A-58170518 Einrichtungen zum Trocknen von Kunststoffgranulat bekannt, die Wärme von der erhitzten Kühlluft auf den Trockengasstrom übertragen bzw. bei denen die Verfahren auf einen Trockenlufttrockner angewandt, zu einem erhöhten Einbringen von Atmosphärischer Feuchtigkeit führen.

Der Erfindung liegt daher die Aufgabe zugrunde, eine unerwünschte Aufheizung des Abgasstroms und/oder der Trockenluft zu vermeiden.

Bei dem eingangs genannten Verfahren ist dazu vorgesehen, daß zum Kühlen ein aus dem heißen Adsorptionsmittel austretender Gasstrom durch einen Wärmespeicher zur Aufnahme der Wärme aus dem heißen Adsorptionsmittel geführt und nach dem Wärmespeicher wieder durch das Adsorptionsmittel geleitet wird. Damit ist eine Beeinflussung des Trocknungsvorgangs und/oder der Trockenluft durch das heiße Adsorptionsmittel ausgeschlossen. Ferner geht die in dem heißen Adsorptionsmittel enthaltene Wärme nicht verloren, sondern kann während der an die Regeneration anschließenden Adsorptionsphase für andere Zwecke aus dem Wärmespeicher entnommen werden. Dadurch wird die Energiebilanz der Aufbereitung des Abgases wesentlich verbessert. Der Wärmespeicher ist praktisch wartungsfrei und daher eine sehr preiswerte Zusatzausrüstung für den Trockner.

In zweckmäßiger Ausgestaltung der Erfindung wird die im Wärmespeicher enthaltene Wärme bei Beginn der folgenden Regeneration zum Aufheizen des für die Regeneration benutzten Gases verwendet, wodurch Heizenergie gespart wird.

Um zu vermeiden, daß der Trockenluftstrom bei der Regeneration herabgesetzt wird, empfiehlt es sich, zum Regenerieren des Adsorptionsmittels Außenluft einzusetzen.

Wenn gemäß der Erfindung der aus dem heißen Adsorptionsmittel austretende Gasstrom solange mehrfach durch den Wärmespeicher und das Adsorptionsmittel zirkuliert wird, bis das Adsorptionsmittel ausreichend gekühlt ist, wird vermieden, daß das frisch regenerierte Adsorptionsmittel bereits durch den zum Kühlen verwendeten Gasstrom mit Feuchte beladen wird, was eintreten würde, wenn zum Kühlen frische Außenluft eingesetzt werden würde.

Der Raumbedarf für den Wärmespeicher wird reduziert, wenn in Weiterführung des erfindungsgemäßen Verfahrens ein Speichermedium mit hoher spezifischer Wärme und/oder mit hoher Wärmeleitfähigkeit wie etwa Metall eingesetzt wird. Glas oder Steine als Speichermedium erlauben leichte Austauschbarkeit des Speichermediums für den Fall einer Verschmutzung durch Abschneiden von mit dem Gas mitgeführten Fremdstoffen. Weiterhin empfiehlt es sich zu diesem Zweck, den Wärmeübergang zwischen dem heißen, trockenen Gas und dem Speichermaterial durch Formgebung des Speichermaterials und/oder Erhöhung der Strömungsgeschwindigkeit des Gases durch den Wärmespeicher zu verbessern. Bewährt hat sich hier die Verwendung kugelförmiger Speichermaterialien aus Eisen oder Glas oder kleinen Steinen, die einen Durchmesser im Schnitt von etwa 2-10mm haben.

Die Menge des Speichermediums sollte bevorzugt so gewählt werden, daß das Produkt aus dem Gewicht des Speichermaterial und dessen spezifischer Wärme ungefähr gleich oder großer ist als das Produkt aus dem Gewicht des zu kühlenden Adsorptionsmittels und dessen spezifischer Wärme.

Die Erfindung wird nachstehend anhand der in der beigefügten Zeichnung dargestellten Ausführungsbeispiele im einzelnen beschrieben. Es zeigen:
- Figur 1: eine mit den Merkmalen der Erfindung ausgerüstete Aufbereitungsvorrichtung für feuchtes, aus einem Kunststoff-Trocknungstrichter kommendes Abgas mit einem Trockentopf;
- Figur 2: eine Vorrichtung nach Figur 1 mit zwei parallel geschalteten Trockentöpfen; und
- Figur 3: eine Vorrichtung nach Figur 1 mit mehreren, auf einem Karussel angeordneten Trockentöpfen;
- Figur 4: eine Aufbereitungsvorrichtung für feuchtes Kunststoffgranulat mit einem Wabentrockner,
- Figur 5 a,b: eine Aufbereitungsvorrichung gemäß Figur 4 mit Wärmespeicher.

In einem Trocknungstrichter 1 befindet sich eine Füllung 2 von Kunststoffgranulat, welches über eine nicht dargestellte obere Einfüllöffnung des Trocknungstrichters 1 kontinuierlich oder abschnittweise in den Trocknungstrichter eingefüllt, in demselben getrocknet und nach der Trocknung aus der unteren Abgabeöffnung 3 aus dem Trocknungstrichter ausgegeben und beispielsweise einer nicht dargestellten Vorrichtung zur Herstellung von Kunststoffartikeln zugeführt wird. Zur Trocknung der Füllung 2 ist in den Trocknungstrichter 1 eine Trockenluftzuführleitung 5 hineingeführt, welche in der Nähe der Ausgabeöffnung 3 mit einem Verteiler 6 im Trocknungstrichter 1 endet. Die durch die Trockenluftzuführleitung 5 in den Trocknungstrichter 1 eingeleitete und auf die erforderliche Temperatur von 80° C oder höher gebrachte Trockenluft durchströmt die Füllung 2 im Trocknungstrichter 1 von unten nach oben und verläßt letzteren durch eine vom Deckel des Trocknungstrichters 1 ausgehende Abluftleitung 8.

Die mit Feuchte beladene Abluft aus dem Trocknungstrichter 1 wird über die Abluftleitung 8 einem im Ganzen mit 10 bezeichneten Trockenlufttrockner zugeführt, in welchem der Abluft die mitgeführte Feuchte entzogen wird. Die Abluft aus der Abluftleitung 8 gelangt daher in dem Trockenlufttrockner 10 über ein erstes Feststoffilter 12 und ein Klappenventil 14 zur Ansaugleitung 16 eines Gebläses 18, dessen Druckleitung 20 in einen äußeren Ringraum 22 eines Trockentopfes 24 mündet. Die feuchte Abluft durchströmt radial ein in dem Trockentopf 24 enthaltenes Adsorptionsmittel 26 in Form von Silikagel und/oder Molekularsieb, welches der Abluft die Feuchte entzieht. Die aus dem Adsorptionsmittel 26 in einen Zentralkanal 28 des Trockentopfes 24 einströmende getrocknete Luft gelangt in eine aus dem Trockentopf 24 herausgeführte Ausgangsleitung 30, in welcher eine Heizeinrichtung 7 installiert ist.

Von der Ausgangsleitung 30 zweigt außerhalb des Trockentopfes 24 die Trockenluftzufuhrleitung 5 ab, in welcher ein Klappenventil 29 sitzt. Von dem aus dem Trockentopf 24 herausgeführten Abschnitt der Ausgangsleitung 30 zweigt eine weitere Zweigleitung 32 ab, in welcher ein weiteres Klappenventil 31 sitzt. Die Zweigleitung 32 führt zu einem Wärmespeicher 50 in Form eines bis auf die Zu- und Ableitung geschlossenen Kastens, in welchem zwischen gegenüberliegenden Sieben 52 und 54 ein Speichermedium 55 untergebracht ist. Das Speichermedium 55 kann aus Glaskugeln, Steinen oder Eisenkugeln, oder auch aus einem Sammelsurium von Schrauben, Muttern und dergleichen metallischen Kleinteilen oder Metallspänen bestehen. An dem der Zweigleitung 32 gegenüberliegenden Ende führt in den Wärmespeicher 50 eine Gasleitung 34, die sich einerseits über Leitung 33 in einen Ansaugfilter 36 und andererseits in eine Gasleitung 38 verzweigt. In der Gasleitung 38 sitzt ein Umschaltventil 40, welches in der gestrichelt eingetragenen Stellung 42 seines Ventilkörpers die Gasleitung 38 mit einer in die Leitung 16 über ein Klappenventil 37 mündende Leitung 35 und damit mit dem Gebläse 18 verbindet. In der ausgezogen dargestellten Stellung 44 des Ventilkörpers verbindet das Umschaltventil 40 die Leitung 35 mit einem ins Freie führende kurzem Schornsteinstück 39.

Während der Adsorptionsphase saugt das Gebläse 18 über die Abluftleitung 8 Abluft aus dem Trocknungstrichter 1 durch den Filter 12 bei dann sich öffnender Ventilklappe 14 und sich schließender Ventilklappe 37 an und drückt die Abluft über Druckleitung 20 in den äußeren Ringraum 22 des Trockentopfes 24. Die Abluft durchdringt das Adsorptionsmittel 26 radial im Trockentopf 24, welches hier aus einer Schicht Silikagel und einer Schicht Molekularsieb besteht. Die vom Adsorptionsmittel 26 getrocknete Luft gelangt radial in den Zentralkanal 28 und von diesem in die Ausgangsleitung 30, wird durch die eingeschaltete Heizung 7 aufgeheizt und wird durch das sich öffnende Klappenventil 29 über Trockenluftzuführleitung 5 wieder in den Trockentrichter 1 als Verbraucher als Trockenluft geleitet. Die Klappe des Klappenventils 31 ist hierbei geschlossen.

Ist das Adsorptionsmittel mit Feuchtigkeit gesättigt, was durch nicht dargestellte Sensoren einer in den Figuren nicht wiedergegebenen Steuerung mitgeteilt wird, schaltet diese die Drehrichtung des Gebläses 18 um, so daß dann aufgrund der veränderten Druckverhältnisse in den Leitungen 5, 8, 16, 32 die Klappenventile 31 und 37 öffnen, während die Klappenventile 14 und 29 schließen. Das Umschaltventil 40 steht in der Stellung 44. Das Gebläse 18 saugt über den Filter 36 Außenluft an, welche über Leitungen 34 und 32 durch den Wärmespeicher 50 streicht und ihn dabei auf Außenlufttemperatur bringt, dann in die Ausgangsleitung 30 gelangt, dort durch die eingeschaltete Heizung 7 (auf z.B. 250°C) aufgeheizt wird und das Adsorptionsmittel radial von innen nach außen aus dem Zentralkanal 28 in den Ringkanal 22 durchströmt, hierbei dessen Feuchtigkeit mitnimmt und den Trockentopf 24 über Leitung 20 verläßt und über Leitungen 35 und 39 nach außen abgeblasen wird.

Wenn aus dem etwa 250°C heißen Adsorptionsmittel 26 alle Feuchte ausgetrieben ist, was durch einen geeigneten Sensor (nicht- dargestellt) festgestellt wird, ist die Regenerationsphase beendet, so daß in die Kühlphase eingetreten werden kann. Dieser Eintritt wird durch Umschalten des Ventils 40 von der Stellung 44 in die Stellung 42 und Abschalten der Heizung 7 erreicht. Die den Trockentopf 24 danach verlassende heiße Außenluft wird vom Gebläse 18 über Leitung 35 in die Leitung 38 und von dieser über Leitung 34 in den Wärmespeicher 50 gedrückt, dessen Speichermaterial die von dem Heißgas mitgeführte Wärmemenge aufnimmt. Das Gas wird weiterhin über Leitung 32, 30, 20, 35, 38, 34 vom Gebläse 18 mehrfach im Kreislauf geführt, so daß allmählich, das heißt innerhalb eines Zeitraums von einigen Minuten, die im Adsorptionsmittel 26 enthaltene Wärmemenge in den Wärmespeicher 50 überführt wird. Dabei wird keine neue Außenluft angesaugt, da die in den Leitungen 38 und 34 herrschenden Druckverhältnisse dies verhindern. Damit wird dem Adsorptionsmittel 26 während des Kühlens keine weitere Feuchte angeboten als diejenige, die in der zirkulierenden Außenluft ursprünglich vorhanden war, weil zum Kühlen keine neue Außenluft angesaugt wird. Diese sogenannte Restfeuchte ist außerordentlich gering. Gegebenenfalls kann in die Zweigleitung 33 die sich von der Einmündung der Leitung 38 in die Leitung 34 bis zum Filter 36 erstreckt, ein weiteres umschaltbares Ventil eingebaut sein.

Nach Beendigung der Kühlphase wird die Drehrichtung des Gebläses 18 sowie das Umschaltventil von der Steuerung umgeschaltet, so daß eine neue Adsorptionsphase beginnen kann.

Bei Beginn der nachfolgenden Regenerationsphase dient die im Wärmespeicher enthaltene Wärmemenge dazu, die über das Filter 36 angesaugte Außenluft aufzuheizen, so daß die darin gespeicherte Wärmemenge zum Aufwärmen des für die Regeneration erforderlichen Heißgases dienen kann, so daß die Heizeinrichtung 7 zu einem späteren Zeitpunkt eingeschaltet werden und damit Heizenergie gespart werden kann.

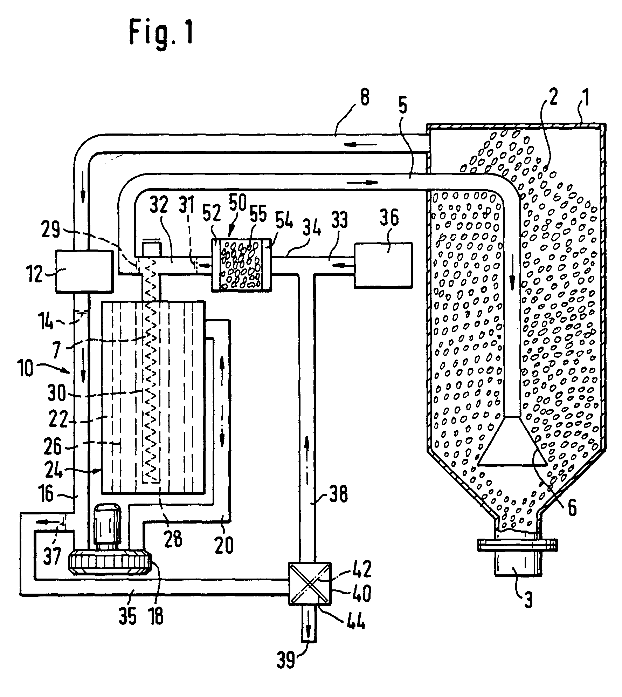

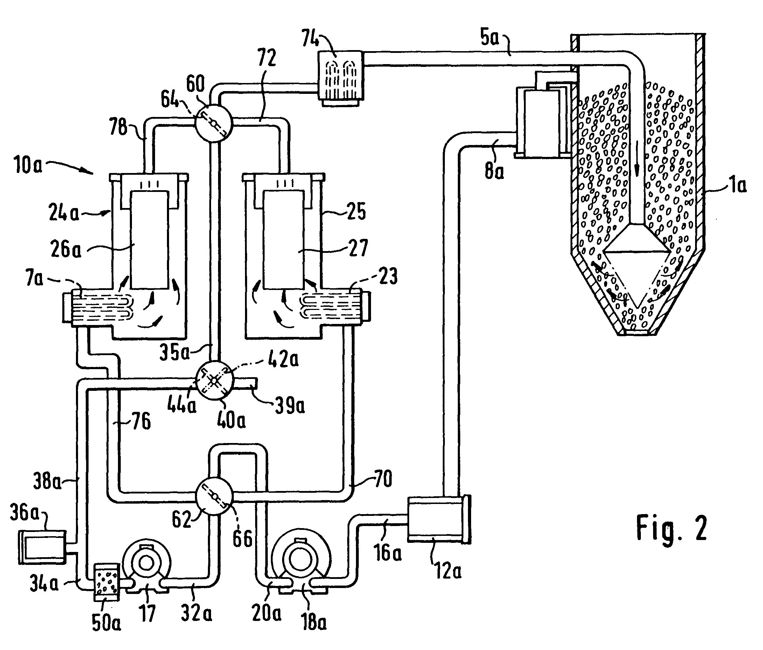

Fig. 2 zeigt eine Vorrichtung mit zwei parallelgeschalteten Trockentöpfen 24a, 25, die abwechselnd im Adsorptions- und Regenerationszyklus betrieben werden. Die mit den Baugruppen gemäß Fig. 1 funktionsgleichen Baugruppen bei der Vorrichtung nach Fig. 2 sind mit gleichen Bezugszeichen und dem Affix a versehen.

Aus einem Granulat-Trocknungstrichter 1a gelangt die Abluft über Abluftleitung 8a, über einen Filter 12a und eine anschließende Ansaugleitung 16a zu einem Gebläse 18a, dessen Druckleitung 20a zu einem ersten Umsteuerventil 62 führt. In der dargestellten Stellung des Ventilkörpers 66 gelangt die Abluft über eine Leitung 70 und eine Heizeinrichtung 23 in den Trockentopf 25, der noch hinreichend trockenes Adsorptionsmittel 27 enthält. Demzufolge ist die Heizeinrichtung 23 abgeschaltet und das in den Trockentopf 25 einströmende Gas durchdringt das in ihme enthaltene Adsorptionsmittel 27, in welchem dem Abgas die Feuchte entzogen wird. Das Trockengas verläßt den Trockentopf 25 über Ablaßleitung 72, welche in ein weiteres Umstellventil 60 führt. In der dargestellten Stellung des Ventilkörpers 64 gelangt die Trockenluft aus der Leitung 72 über die Trockenluftzuführleitung 5a in den Trocknungstrichter 1a, wobei sie eine Heizeinrichtung 74 passiert.

Gleichzeitig saugt ein Gebläse 17 Außenluft über einen Ansaugfilter 36a und einen Rohrstutzen 34a sowie einen in den Rohrstutzen 34a eingeschalteten Wärmespeicher 50a (der dabei auf Außenluft-Temperatur gebracht wird) an und drückt sie über eine Druckleitung 32a, das Umschaltventil 62, eine diesem nachgeschaltete Leitung 76 und eine eingeschaltete Heizeinrichtung 7a in den zweiten Trockentopf 24a. In letzterem durchströmt die auf etwa 250°C aufgeheizte Außenluft das Adsorptionsmittel 26a im Trockentopf 24a und nimmt aus dem Adsorptionsmittel 26a die darin enthaltene Feuchte mit. Die mit Feuchte beladene heiße Luft gelangt über Auslaßleitung 78 des Trockentopfes 24a und das weitere Umstellventil 60 in eine Leitung 35a, aus welcher die feuchtebeladene Luft vermöge der Stellung 44a des Ventilkörpers des Umschaltventils 40a über den Rohrstutzen 39a nach außen entweicht.

Wenn die Regeneration abgeschlossen ist, wird in die Kühlphase eingetreten, bei der der Ventilkörper des Umschaltventils 40a in die gestrichelt dargestelllte Stellung 42a überführt wird, so daß der heiße, jetzt trockene Luftstrom aus der Leitung 35a über das Umschaltventil 40a in eine Leitung 38a gelangt, welche zwischen dem Ansaugfilter 36a und dem Wärmespeicher 50a in den Rohrstutzen 34a mündet. Dadurch kann das Heißgas seine mitgeführte Wärme im Wärmespeicher 50a abladen und wird durch das laufende Gebläse 17 solange durch die Rohrleitungen 32a, 76, 78, 35a, 38a, 34a im Kreislauf geleitet, bis das Adsorptionsmittel 26a hinreichend abgekühlt ist. Dann werden die Umschaltventile 60 und 62 sowie 40a umgeschaltet, so daß der Trockentopf 25 jetzt in die Regeneration und der Trockentopf 24a in die Adsorption eintreten können. Bei der beginnenden Regeneration des Trockentopfes 25 wird die vom Gebläse 17 über das Außenfilter 36a angesaugte Außenluft in dem jetzt heißen Wärmespeicher 50a aufgeheizt, so daß wie bei dem vorstehend erläuterten Ausführungsbeispiel der Erfindung die in dem Adsorptionsmittel 26a bei Beginn der Kühlung enthaltene Wärmemenge zum Aufheizen der Außenluft zu Heißgas für die Regeneration des Adsorptionsmittels 27 bei Beginn der Regenerationsphase benutzt werden kann.

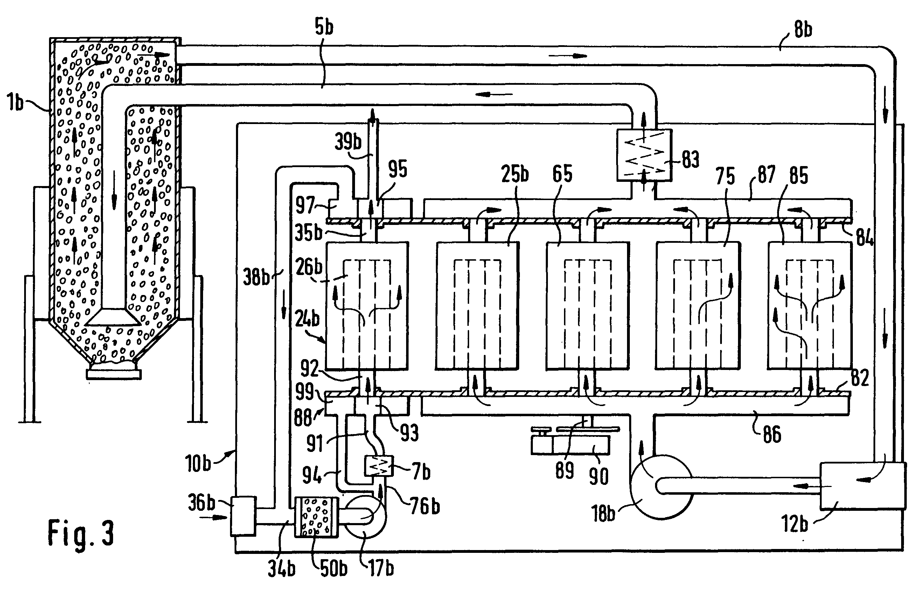

Der mit dem Trocknungstrichter 1b gemäß Fig. 3 gekoppelte Trockenlufttrockner ist von der "Karussel"-Bauart, die grundsätzlich aus der US-Patentschrift 3,757,492 bekannt ist. Danach enthält das Karussel im vorliegenden Beispiel fünf Trockentöpfe 25b, 65, 75, 85 und 24b, die zusammen mit einer unteren Ventilscheibe 82 und einer oberen Ventilscheibe 84 mit einer vom Motor 90 angetriebenen Welle 89 drehbar und in gegenüberliegenden Öffnungen der Ventilscheiben 82 und 84 gehalten sind. Der unteren Ventilscheibe 82 sind drei untere stationäre Ventilkammern 86, 93, 99 zugeordnet, während die obere Ventilscheibe 84 mit drei stationären oberen Ventilkammern 87, 95, 97 zusammenwirkt. Die fünf Trockentöpfe sind auf einer zur Welle 89 konzentrischen Kreisbahn angeordnet und die sechs Ventilkammern sind längs konzentrischen Kreisbogen ausgebildet. Ein Gebläse 18b saugt aus einer Abluftleitung 8b über einen Filter 12b mit Feuchte beladenes Abgas an und läßt es über die untere Ventilkammer 86 durch die mit den Trockentöpfen 25b, 65, 75, 85 korrespondierende Öffnungen gemäß den eingezeichneten Pfeilen in die Trockentöpfe 25b, 65, 75, 85 gelangen, welche sich in der Adsorptionsphase befinden. Durch das in den genannten Trockentöpfen enthaltene Adsorptionsmittel wird dem feuchten Abgas die Feuchte entzogen, so daß den Trockentöpfen 25b, 65, 75, 85 durch die mit der oberen Ventilkammer 87 korrespondierenden Öffnungen gemäß den eingezeichneten Pfeilen Trockenluft verläßt, durch eine Heizeinrichtung 83 auf die erforderliche Temperatur gebracht und über eine Trockenluftleitung 5b dem Trocknungstrichter 1b zugeführt wird.

Der fünfte Trockentopf 24b befindet sich in der Regenerationsphase, während der aus einem Ansaugfilter 36b über eine Leitung 34b und einen Wärmespeicher 50b von einem Gebläse 17b Außenluft angesaugt und über einen Kanal 76b und eine Heizeinrichtung 7b, einen anschließenden Rohrstutzen 91 der Ventilkammer 93 zuführt. Aus der Ventilkammer 93 gelangt die Heißluft durch eine Öffnung gemäß eingetragenem Pfeil in das Innere des Trockentopfes 24b und durchströmt das mit Feuchtigkeit gesättigte Adsorptionsmittel 26b. Dort nimmt das Heißgas die Feuchte mit und verläßt den Trockentopf 24b über den Rohrstutzen 35b sowie über die Ventilkammer 95, um von dieser über einen Schornstein 39b abgeblasen zu werden.

Während der an die Regenerationsphase anschließenden Kühlphase wird das Karussel bestehend aus den fünf Trockentöpfen und zugehörigen Ventilscheiben 82 und 84 um die Achse 89 weitergedreht, so daß der Rohrstutzen 35b über der Ventilkammer 97 und ein Einlaßrohrstutzen 92 über der Ventilkammer 99 steht. Die Ventilkammer 97 ist über ein Verbindungsrohr 38b mit dem Rohrstück 34b verbunden. Das Gebläse 17b drückt das aus dem Trockentopf 24b in die Ventilkammer 97 ausströmende Heißgas jetzt über Leitung 38b und 34b in den Wärmespeicher 50b, der dem Heißgas die Wärme entzieht. Da jetzt der Ansaugstutzen 92 nicht mehr über der Ventilkammer 93 sondern über der Ventilkammer 99 steht, kann die vom Gebläse 17b geförderte Luft nur über den Zweigkanal 94 in die Ventilkammer 99 und von dort über eine nicht dargestellte Öffnung in den Ansaugstutzen 92 und von da in den Trockentopf 24b gelangen. Im weiteren Verlauf wird die das Adsorptionsmittel 26b zwecks Kühlung durchstreichende Luft über den Ablaßstutzen 35b und eine nichtdargestellte Öffnung in die Ventilkammer 97 gedrückt und wiederum über die Kanäle 38b und 34b zum Wärmespeicher 50b zurückbefördert.

Wenn das Adsorptionsmittel 26b hinreichend kühl geworden ist, wird der Trockentopf 24b durch entsprechendes Drehen des Karussels wieder in die Adsorption überführt, während bei Bedarf einer der weiteren Trockentöpfe 25, 65, 75, 85 in die Regenerationsphase durch Drehen des Karusells in die vorher vom Trockentopf 24b gemäß Fig. 3 eingenommene Stellung überführt wird. Das Gebläse 17b saugt dann über den Ansaugfilter 36b kühle Außenluft an, die im Wärmespeicher 50b aufgeheizt und nach dessen Erschöpfung von der Heizung 7b auf die erforderliche Temperatur von 250°-300°C gebracht wird.

### Beispiel: Trockenlufttrockner mit einer Trockenluftmenge von 200m³/h:

In der Adsorptionsphase kann einer der Trockentöpfe bei dem zuletzt beschriebenen Karuselltrockner etwa 60 Minuten verbleiben. Die anschließende Regenerationsphase kann etwa 10 Minuten und die anschließende Kühlphase etwa 5 Minuten Zeit in Anspruch nehmen. Die Füllmenge eines Trockentopfes mit Molekularsieb kann zwischen 2 und 4 kg betragen. Der Luftdurchsatz an Regenerationsluft kann 50-100 m³/h betragen. Die Regenerationslufttemperatur (Heißgastemperatur) kann zwischen 180° und 250°C betragen. Der Inhalt des Wärmespeichers kann 4-8 kg an Stahlkugeln von im Schnitt 2-10 mm Durchmesser betragen.

Die in der Beschreibung erwähnten Klappenventile sind bevorzugt Rückschlagventile. Der Trockenlufttrockner kann für eine Trockenluftmenge von 20...2000m³/h ausgelegt sein.

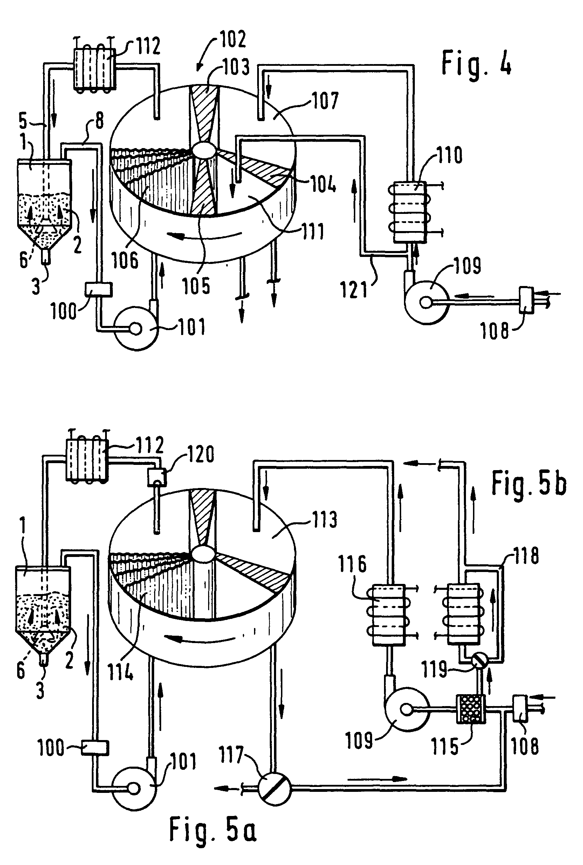

Gemäß Figur 4 wird zur Luftentfeuchtung ein Wabentrockner eingesetzt. In einem Trocknungstrichter 1 befindet sich eine Füllung 2 von Kunststoffgranulat, welches kontinuierlich oder abschnittsweise in den Trocknungstrichter eingefüllt und in demselben getrocknet und nach der Trocknung aus der unteren Abgabeöffnung 3 aus dem Trocknungstrichter ausgegeben wird. Zur Trocknung der Füllung 2 führt in den Trocknungstrichter 1 eine Trockenluftzuführleitung 5, welche in den Nähe der Ausgabeöffnung 3 mit einem Verteiler 6 im Trocknungstrichter 1 endet. Die durch die Trockenluftzuführleitung 5 in den Trocknungstrichter 1 eingeleitete und auf die erforderliche Temperatur von 80 °C oder höher gebrachte Trockenluft, durchströmt die Füllung 2 im Trocknungstrichter 1 von unten nach oben und verläßt letzteren durch eine vom Deckel des Trocknungstrichter 1 ausgehende Abluftleitung 8. Die mit Feuchte beladene Abluft aus dem Trocknungstrichter 1 wird über die Abluftleitung 8 über ein Filter 100 und eine Förderpumpe 101 einem Trockenluftrockner 102 zugeführt. Dieser ist als sogenannter Wabentrockner ausgestaltet, das heißt er besteht im wesentlichen aus einer Drehscheibe, welche sich etwa 1 bis 3 mal pro Stunde dreht. Durch 3 stationär angeordnete Dichtstreifen 103, 104, 105 sind die Waben - typischerweise gefaltetes Papier oder Glasseide welches mit Molekularsieb beschichtet ist - in drei Bereiche unterteilt. Im Bereich 106 findet die Absorption der zugeführten Feuchtigkeit statt, welche in der Rückluft, vom Trocknungstrichter kommend, enthalten ist. In dem Abschnitt 107 wird durch Hindurchblasen von aufgeheizter Außenluft regeneriert. Diese Außenluft gelangt über ein Filter 108 und einem Gebläse 109 sowie eine Heizung 110 zu diesem Abschnitt 107. Im Abschnitt 111 wird kalte Außenluft zur Kühlung über die Leitung 121 eingeblasen. Anschließend drehen sich die so behandelnden Waben in den Adsorptionsteil. Die Wabenscheibe dreht sich kontinuierlich. Die 3 Vorgänge Absorbieren, Heizen und Kühlen finden kontinuierlich nebeneinander statt. Ein Wabentrockner ist beispielsweise auch aus der Veröffentlichung "Multi function system, Multi jet II" der Fa. Matsui zu entnehmen.

Figur 5 zeigt die Anwendung eines Wärmespeichers bei einem solchen Wabentrockner. Die Kühlzone 111 gemäß Figur 4 ist entfallen. Heizen zum Regenerieren und anschließendes Kühlen findet im selben Abschnitt, nämlich in Abschnitt 113 statt. Während eines Heiz- und Kühltaktes bleibt der Wabenkörper stehen. Nach Abschluß von Heizen und Kühlen wird der Wabenkörper um einen Betrag weitergedreht der den regenerierten und gekühlten Wabenteil in die Adsorptionszone 114 und gleichzeitig einen mit Feuchtigkeit gesättigten Wabenteil in die Regenerationszone 113 bewegt. Die Adsorptionszone nimmt, wie auch in Figur 4 gezeigt, die mit Feuchte beladene Abluft aus dem Trocknungstrichter 1 auf. Nach Einbringung eines Wabenteils in die Regenerationszone 113 wird während eines Zeitraums von typischerweise 2 bis 6 Minuten Außenluft über das Filter 108 angesaugt, durch den Wärmespeicher 115 geführt und über die Regenerationsheizung 116 auf die erforderliche Regenerationstempratur gebracht. Diese erwärmte Luft wird durch die Regenerationszone geführt, nimmt die dort enthaltene Feuchtigkeit auf und führt diese mit Feuchte beladene Luft über das Ventil 117 nach außen. Wenn aus dem etwa 250 °C heißem Adsorptionsmittel die Feuchte ausgetrieben ist, ist die Regenerationsphase beendet, so daß in die Kühlphase eingetreten werden kann. Diese Phase wird durch Umschalten des Ventils 117 eingeleitet. Die die Regenerationszone danach verlassende heiße Außenluft wird vom Gebläse 109 in den Wärmespeicher 115 gedrückt. Dessen Speichermaterial nimmt die von dem Heißgas mitgeführte Wärmemenge auf. Das Gas wird weiterhin vom Gebläse mehrfach im Kreislauf geführt, so daß allmählich, das heißt innerhalb eines Zeitraums von einigen Minuten, die im Adsorptionsmittel enthaltene Wärmemenge in den Wärmespeicher 115 überführt ist. Dabei wird keine Außenluft angesaugt. Damit wird dem Adsorptionsmittel in dem Wabentrockner auch keine weitere Feuchte angeboten als diejenige die in der zirkulierenden Außenluft ursprünglich vorhanden war, weil zum Kühlen keine neue Außenluft angesaugt wird. Nach Beendigung der Kühlphase wird, wie bereits erwähnt, der Wabenkörper um einen Betrag weitergedreht und ein neuer Regenerationszyklus beginnt.

Die Figur 5 b zeigt eine Abwandlung des Regenerationskreislaufs. Hier ist parallel zur Heizung 116 ein Bypassventil mit einem Bypass 118 angeordnet. Dieser Bypass wird beim Kühlen der Regenerationszone eingeschaltet, so daß der Wärmeinhalt der Heizung nicht verlorengeht bzw. die Heizung nicht heruntergekühlt werden muß. Damit ist ein weiteres Einsparpotential bezüglich der erforderlichen Wärmeenergie nutzbar.

Zum Umschalten des Bypasses gemäß Figur 5 b ist ein Wechselventil 119 angeordnet. Damit wird die Regenerationsluft während des Heiztaktes durch den Heizkörper und während des Kühltaktes parallel an diesem vorbeigeführt.

Die Gesamtanordnung mit kurzzeitigem Stillstand des Wabentrockners hat den Vorteil, daß ein neuer Wabenteil immer erst dann regeneriert werden muß, wenn dieser mit Wasser hinreichend gesättigt ist. Ein Sensor 120, der in der Zuführleitung, das heißt in der Trockenluftleitung angeordnet ist, mißt zum Beispiel den Taupunkt dieser gerade getrockneten Luft. Durch diese Messung kann die Feuchtigkeitsaufnahmekapazität des Adorptionsmittel optimal ausgenutzt werden. Außerdem wird damit die Adsorptionszeit in Abhängigkeit von der adsorbierten Feuchtigkeitsmenge gesteuert. Selbstverständlich besteht auch die Möglichkeit die adsorbierte Feuchtigkeitsmenge, zum Beispiels durch gravimetrische Messung des Wabenkörpers oder durch einen Thermofühler, der die Temperatur des Adsorptionsmittels überwacht, zu bestimmen.

Ist der Feuchtigkeitsgehalt der getrockneten Luft außerhalb eines bestimmten Grenzwertes, so dreht sich die Wabenscheibe um den entsprechenden Segmentabschnitt weiter. Dies bedeutet, daß der Wabenkörper nur dann weitergedreht wird, wenn tatsächlich auch eine Regeneration erforderlich ist.

## Patentansprüche

1. Verfahren zum Betreiben eines Trockenluft-Trockners, wobei Luft durch das feuchte Gut (2) und über ein Feuchte-Adsorptionsmittel (26) im Kreislauf geleitet wird, wobei das Feuchte-Adsorptionsmittel (26) bei Feuchtesättigung durch Heißgas regeneriert wird,
wobei das Heißgas Außenluft ist, welche durch eine Regenerierleitung (32,33,34,35) zum Adsorptionsmittel (26) geleitet wird und dabei durch eine Heizung (7) erhitzt wird, wobei das Heißgas beim Durchströmen des Adsorptionsmittel dessen Feuchtigkeit aufnimmt und nach außen abgeblasen wird, wobei anschließend an die Regenerierung das Adsorptionsmittel (26) ohne Ansaugung neuer Außenluft gekühlt wird,
wobei die nach der Regenerierung in der Regenerierleitung (32,33,34,35) verbliebene Außenluft in einem über Ventile (31,37) zugeschalteten, parallel zum Trockenluftkreislauf angeordneten und über weitere Ventile (14, 29) von diesem getrennten Regenerierkreislauf (20,35,38,34,32,30) zirkuliert wird, in welchem das Adsorptionsmittel (26) und eine Vorrichtung (50) zur Abkühlung der zirkulierenden Luft angeordnet sind,
**dadurch gekennzeichnet,**
**daß** der Regenerierkreislauf einen Wärmespeicher (50) als Mittel zur Abkühlung enthält,
**daß** die zur Regenerierung verwendete Außenluft vor ihrer Erhitzung in der Heizeinrichtung (7) zur Vorwärmung durch den Wärmespeicher geleitet wird,
und **daß** die zur Abkühlung verwendete Außenluft im geschlossenen Regenerierkreislauf (20,35,38,34,32,30) mehrfach durch den Wärmespeicher (50) und das Adsorptionsmittel (26) zirkuliert wird, bis das Adsorptionsmittel (26) ausreichend gekühlt ist.

2. Verfahren nach Anspruch 1, **dadurch gekennzeichnet, daß** im Wärmespeicher (50) als Speichermedium Glas/- und/oder Metallstücke und/oder Steine verwendet werden.

3. Verfahren nach Anspruch 1, **dadurch gekennzeichnet, daß** als Speichermedium im Wärmespeicher (50) Materialkugeln verwendet werden, deren Durchmesser im Schnitt zweckmäßig unter 10mm, vorzugsweise zwischen 10mm und 2mm gewählt wird.

4. Verfahren nach einem der vorstehenden Ansprüche, **dadurch gekennzeichnet, daß** die Menge des Speichermediums so gewählt wird, daß das Produkt aus dem Gewicht des Speichermaterials und dessen spezifische Wärme ungefähr gleich oder größer ist als das Produkt aus dem Gewicht des zu kühlenden Adsorptionsmittels (26) und dessen spezifische Wärme.

## Claims

1. Method of operating a dry-air dryer, wherein air is circulated through the moist matter (2) and via a moisture adsorption means (26), wherein the moisture adsorption means (26) is regenerated by hot gas in the event of moisture saturation, wherein the hot gas is outside air which is conducted to the adsorption means (26) through a regeneration pipe (32,33,34,35) and is thereby heated by a heater (7), wherein the hot gas absorbs the moisture from the adsorption means when flowing therethrough and is discharged outwardly, wherein the adsorption means (26) is cooled without drawing-in fresh outside air subsequently to the regeneration, wherein the outside air, remaining in the regeneration pipe (32,33,34,35) after the regeneration, is circulated in a regeneration circuit (20,35,38,34,32,30), which is switched-on via valves (31,37), is disposed parallel to the dry-air circuit and is separated from said dry-air circuit via additional valves (14,29), the adsorption means (26) and an apparatus (50) for cooling the circulating air being disposed in said regeneration circuit, **characterised in that** the regeneration circuit includes a heat storage unit (50) as the cooling means, **in that** the outside air, used for regeneration purposes, is conducted through the heat storage unit for preliminary warming prior to its being heated in the heater (7), and **in that** the outside air, used for cooling purposes, in the closed regeneration circuit (20,35,38,34,32,30) is circulated repeatedly through the heat storage unit (50) and the adsorption means (26) until the adsorption means (26) is cooled sufficiently.

2. Method according to claim 1, **characterised in that** pieces of glass and/or pieces of metal and/or stones are used in the heat storage unit (50) as the storage medium.

3. Method according to claim 1, **characterised in that** balls of material are used as the storage medium in the heat storage unit (50), the diameter of said balls being advantageously selected to be less than 10 mm, preferably between 10 mm and 2 mm, in cross-section.

4. Method according to one of the preceding claims, **characterised in that** the quantity of storage medium is so selected that the product of the weight of the storage material and the specific heat thereof is approximately identical to or greater than the product of the weight of the adsorption means (26) to be cooled and the specific heat thereof.

## Revendications

1. Procédé pour exploiter un séchoir à air sec, selon lequel
- de l'air est recyclé à travers un produit humide (2) et sur un agent adsorbant l'humidité (26),
- l'agent adsorbant (26), quand il est saturé d'eau, est régénéré par un gaz chaud,
- le gaz chaud est de l'air extérieur, amené par une conduite de régénération (32, 33, 34, 35) à l'agent adsorbant (26) et réchauffé par un chauffage (7),
- le gaz chaud, en traversant l'agent adsorbant, retire à celui-ci de l'humidité et est évacué à l'extérieur,
- à la suite de la régénération, l'agent adsorbant (26) est refroidi sans aspiration d'air extérieur neuf,
- l'air extérieur qui subsiste, après la régénération, dans la conduite de régénération (32, 33, 34, 35) est mis en circulation dans un circuit de régénération (20, 35, 38, 34, 32, 30) connecté par des soupapes (31, 37) montées en parallèle avec le circuit d'air sec dont il est séparé par d'autres soupapes (14, 29) et dans le circuit de régénération sont montés l'agent adsorbant (26) ainsi qu'un dispositif (50) pour refroidir l'air en circulation,
**caractérisé en ce que**
- le circuit de régénération contient un accumulateur de chaleur (50) recevant le moyen de refroidissement,
- l'air extérieur utilisé pour la régénération, avant d'être chauffé dans le dispositif de chauffage (7) passe à travers l'accumulateur de chaleur pour y être préchauffé, et
- l'air extérieur utilisé pour le refroidissement passe plusieurs fois dans le circuit fermé de régénération(20, 35, 38, 34, 32, 30) à travers l'accumulateur de chaleur (50) et l'agent adsorbant (26) jusqu'à ce que l'agent adsorbant (26) soit suffisamment refroidi.

2. Procédé selon la revendication 1,
**caractérisé en ce que**
dans l'accumulateur de chaleur (50), on utilise comme milieu d'accumulation des pièces en verre ou en métal et/ou des pierres.

3. Procédé selon la revendication 1,
**caractérisé en ce qu'**
on utilise comme milieu d'accumulation dans l'accumulateur de chaleur (50) des billes dont le diamètre est choisi inférieur à 10 mm, de préférence entre 10 et 2 mm.

4. Procédé selon l'une quelconque des revendications précédentes,
**caractérisé en ce que**
la quantité du milieu d'accumulation est choisie de manière que le produit du poids du matériau d'accumulation et de la chaleur spécifique de celui-ci est sensiblement égal ou supérieur au produit du poids de l'agent adsorbant à refroidir (26) et de la chaleur spécifique de celui-ci.
